# EUROPÄISCHE PATENTSCHRIFT

(11) **EP 2 999 068 B1**
(45) Veröffentlichungstag und Bekanntmachung des Hinweises auf die Patenterteilung: **02.08.2017**
(21) Anmeldenummer: 15166887.8
(22) Anmeldetag: 08.05.2015
(51) Int. Cl.: H02B 13/025

(54) **ELEKTRISCHE ANLAGE UND MONTAGEVERFAHREN**
ELECTRICAL SYSTEM AND METHOD OF ASSEMBLY
INSTALLATION ÉLECTRIQUE ET PROCÉDÉ DE MONTAGE

(30) Priorität: 18.09.2014 DE 102014218825
(43) Veröffentlichungstag der Anmeldung: 23.03.2016
(73) Patentinhaber: Siemens Aktiengesellschaft, 80333 München (DE)
(72) Erfinder: Czeromin, Kay, 64572 Büttelborn (DE)

(56) Entgegenhaltungen:
- DE-U- 1 816 384
- US-A1- 2014 118 887
- US-A1- 2014 211 443

## Beschreibung

Die Erfindung betrifft eine elektrische Anlage, insbesondere eine gasisolierte Mittelspannungsschaltanlage, mit mindestens einem gekapselten Funktionsmodul, welches ein im Wesentlichen quaderförmiges Gehäuse aufweist, sowie einem sich parallel zu einer Frontseite der elektrischen Anlage erstreckenden Druckentlastungskanal, welcher im Bereich einer Oberseite des Gehäuses auf das Gehäuse aufgesetzt ist. Weiterhin betrifft die Erfindung ein Verfahren zur Montage des Druckentlastungskanals auf der elektrischen Anlage.

Eine elektrische Mittelspannungsschaltanlage mit mindestens einem Funktionsmodul mit einem im Wesentlichen quaderförmigen Gehäuse, sowie einem sich parallel zu einer Frontseite der Anlage erstreckenden, auf das Gehäuse aufgesetzten Druckentlastungskanal, ist beispielweise aus den Patentschriften EP2109924 A1 und US2014211443 A1 bekannt. Im Falle einer Druckbeaufschlagung durch einen in der Mittelspannungsschaltanlage auftretenden Störlichtbogen, beispielsweise im Falle eines Kurzschlusses oder dergleichen, können heiße Gase, welche durch einen derartigen Störlichtbogen und die Druckbeaufschlagung entstehen, aus dem Gehäuse des jeweiligen Funktionsmoduls in den Druckentlastungskanals entweichen. Der Druckentlastungskanal dient dazu, die unter Druck ausströmenden heißen Gase kontrolliert zu kanalisieren und aus dem unmittelbaren Nahbereich der elektrischen Anlage, um eine Gefährdung - insbesondere umstehender Personen, aber auch der Anlage selbst oder des Gebäudes - durch derartige Gasaustritte sowie die damit verbundenen Druckbeanspruchungen zu vermeiden oder zumindest Bei der Montage einer derartigen elektrischen Anlage werden zunächst die einzelnen Funktionsmodule nebeneinander in Reihe aufgestellt und mit der vorhandenen Elektroinstallation elektrisch verbunden. Anschließend wird der Druckentlastungskanal auf den Gehäusen der einzelnen Funktionsmodule befestigt. Da die Verbindungsstellen jedoch teilweise schwer zugänglich sind, ist dies jedoch insbesondere in engen Räumen problematisch - bis hin zur Frage einer grundsätzlichen Montierbarkeit der Anlage in engen Räumen. Aber auch aus Gründen der Ergonomie ist hier eine Verbesserung anzustreben.

Es ist deshalb die Aufgabe der vorliegenden Erfindung, eine elektrische Anlage der eingangs genannten Art weiterzubilden welche über einen kompakten Aufbau verfügt und auch in beengten Räumen einfacher zu montieren ist. Weiterhin ist es die Aufgabe der vorliegenden Erfindung, ein entsprechend einfacher auszuführendes Montageverfahren bereitzustellen.

Diese Aufgabe wird durch die elektrische Anlage sowie das Montageverfahren gemäß den unabhängigen Ansprüchen gelöst. Vorteilhafte Ausgestaltungen sind Gegenstand der abhängigen Ansprüche.

Die erfindungsgemäße elektrische Anlage, welche insbesondere als gasisolierte Mittelspannungsschaltanlage ausgebildet ist, weist mindestens ein Funktionsmodul mit ein im Wesentlichen quaderförmigen Gehäuse, sowie einen sich parallel zu einer Frontseite der elektrischen Anlage erstreckenden Druckentlastungskanal, welcher im Bereich einer Oberseite des Gehäuses auf das Gehäuse aufgesetzt ist, auf. Der Druckentlastungskanal ist dabei modular aufgebaut, wobei jedem Funktionsmodul ein entsprechendes Modul des Druckentlastungskanals eindeutig zugeordnet ist. Weiterhin ist jedes Modul des Druckentlastungskanals in einem der Frontseite abgewandten hinteren Bereich des dem jeweiligen Modul zugeordneten Funktionsmoduls in das Gehäuse des jeweils zugeordneten Funktionsmoduls eingesteckt, wodurch eine erste schraubenlose Verbindung gebildet ist.

Durch den modularen Aufbau des Druckentlastungskanals wird eine einfache Anpassung an die Anzahl der zur elektrischen Anlagen gehörenden Funktionsmodule gewährleistet, was die Abläufe am Ort der Montage deutlich vereinfacht. Auch die Teile- sowie Ersatzteile-Logistik werden dadurch deutlich vereinfacht. Ein Funktionsmodul stellt dabei eine Schalteinheit der elektrischen Anlage dar. Die Oberseite des Gehäuses eines solchen Funktionsmoduls wird zumindest teilweise durch eine Sammelschienen-Abdeckung gebildet, in der ein oder mehrere Austrittsöffnungen ausgebildet sind, durch die die heißen Gase im Falle einer Druckbeaufschlagung des Funktionsmoduls, beispielsweise durch einen in der elektrischen Anlage auftretenden Störlichtbogen, unter Druck in den Druckentlastungskanal entweichen können. In einem hinteren, der Front- oder Bedienseite der elektrischen Anlage abgewandten Bereich der Oberseite eines Gehäuses sind ein oder mehrere Aufnahmen ausgebildet, in die das zugeordnete Modul des Druckentlastungskanals einsteckbar ist. Die Aufnahmen können dabei auch in der Sammelschienen-Abdeckung ausgebildet sein. Durch diese schraubenlose Steckverbindung zwischen dem Gehäuse des Funktionsmoduls und dem zugeordneten Modul des Druckentlastungskanals wird eine einfache und ergonomische Montage des Druckentlastungskanals von vorne ermöglicht. Umständlich zu realisierende Schraubverbindungen, die insbesondere in beengten Räumlichkeiten immer wieder zu Problemen geführt haben, sind dadurch obsolet.

Darüber hinaus ist auch eine Montage des Druckentlastungskanals zu einer raumhohen elektrischen Anlage, welche unmittelbar oberhalb des Druckentlastungkanals durch eine Decke begrenzt ist, möglich, da die im hinteren Bereich liegende, erste schraubenlose Verbindung des Druckentlastungkanals mit dem Gehäuse des Funktionsmoduls von vorne, d.h. von der Front- oder Bedienseite der elektrischen Anlage aus, herstellbar ist. Auf diese Weise sind auch Anlagen projektierbar, die ansonsten - bei herkömmlicher Schraub-Montage des Druckentlastungkanals - aufgrund des durch die Deckenhöhe stark begrenzten Bauraumes - und damit der Unzugänglichkeit der hinten liegenden Verbindung - so nicht realisierbar wären.

In einer vorteilhaften Weiterbildung der elektrischen Anlage erstreckt sich die erste schraubenlose Verbindung an dem ersten Modul an dem ersten Modul im Wesentlichen in einer zur Frontseite parallel orientierten ersten Richtung und weist zumindest ein Zentriermittel zur Selbstzentrierung in dieser ersten Richtung auf. Mit Hilfe des Zentriermittels erfolgt eine Selbstzentrierung des zu montierenden Moduls des Druckentlastungskanals relativ zum Gehäuse bzw. zur Sammelschienen-Abdeckung des Funktionsmoduls. Dadurch wird eine exakte Ausrichtung des Druckentlastungskanals relativ zum Gehäuse des Funktionsmoduls gewährleistet. Darüber hinaus sind sowohl die Montage, als auch die Ausrichtung der Teile zueinander auf ergonomische Art und Weise realisierbar.

In einer weiteren vorteilhaften Weiterbildung der elektrischen Anlage weist jedes der Module des Druckentlastungskanals eine Lasche auf, über die das betreffende Modul mit dem benachbart angeordneten Modul schraubenlos verbindbar ist, wodurch eine zweite schraubenlose Verbindung gebildet ist. Mit Hilfe der zweiten Verbindung wird eine Stabilität der einzelnen Module des Druckentlastungskanals untereinander hergestellt, wodurch die Funktionsfähigkeit des Druckentlastungskanals sichergestellt ist. Da auch diese Verbindung schraubenlos realisiert ist, ist auch hier eine Montage bei stark begrenztem Bauraum möglich.

In einer weiteren vorteilhaften Weiterbildung der elektrischen Anlage weisen die Module einen L-förmigen Grundkörper mit einem ersten Schenkel und einem zweiten Schenkel auf, wobei die erste schraubenlose Verbindung jeweils am ersten Schenkel und die zweite schraubenlose Verbindung jeweils am zweiten Schenkel des L-förmigen Grundkörpers ausgebildet sind. Durch die Verwendung eines L-förmigen Grundkörpers kann das Modul an jeder Stelle des Druckentlastungskanals - sei es als mittleres Element oder auch als Randelement - eingesetzt werden. Die verschiedenen Varianten können dabei später durch weitere Anbauteile - beispielsweise durch Anbau von Seitenwänden - gebildet werden. Auf diese Weise wird die Variantenvielfalt deutlich reduziert, was sich vorteilhaft auf die Logistik- und Montagekosten - und damit auf die Herstellkosten der elektrischen Anlage - auswirkt.

In einer weiteren vorteilhaften Weiterbildung der elektrischen Anlage erstreckt sich die zweite schraubenlose Verbindung an dem zweiten Schenkel im Wesentlichen in einer quer zur ersten Richtung orientierten zweiten Richtung. Durch die Orientierung der Wirklinie der zweiten schraubenlosen Verbindung quer - vorteilhafter Weise senkrecht - zur Wirklinie der ersten schraubenlosen Verbindung ist eine besonders stabile Konstruktion realisierbar.

In einer weiteren vorteilhaften Weiterbildung der elektrischen Anlage ist die zweite schraubenlose Verbindung als Überlappung ausgebildet. Hierunter ist zu verstehen, dass ein Teilbereich des zweiten Moduls - insbesondere des zweiten Schenkels des zweiten Moduls - mit einem Teilbereich des ersten Moduls - insbesondere des zweiten Schenkels des ersten Moduls - überlappt. Eine derartige Überlappung planer, d.h. ebener Teilflächen stellt eine kraftschlüssige, jedoch zumindest in einer Richtung auch formschlüssig wirkende Verbindung dar. Ist die Überlappung darüber hinaus nicht plan, sondern profiliert ausgebildet, so ist darüber hinaus auf einfache Art und Weise auch eine in zumindest einer weiteren Richtung wirkende, formschlüssige Verbindung realisierbar.

In einer weiteren vorteilhaften Weiterbildung der elektrischen Anlage weist die zweite schraubenlose Verbindung ein zusätzliches Dichtmittel auf. Durch die Verwendung eines Dichtmittels - beispielsweise eines Filzes, einer Gummi- oder Kunststoff-Dichtung - kann die Dichtigkeit dieser Verbindung, und damit des gesamten Druckentlastungskanals, weiter verbessert werden. Dies ist insbesondere zur Einhaltung bestimmter länderspezifischer Spezifikationen von Vorteil.

In einer weiteren vorteilhaften Weiterbildung der elektrischen Anlage sind benachbarte Funktionsmodule mit Hilfe eines in der zweiten Richtung (R2) aufsteckbaren Verbindungselements miteinander verbindbar. Die Verbindungselemente dienen dazu, jeweils zwei benachbart nebeneinander angeordnete Funktionsmodule der elektrischen Anlage durch Aufstecken des Verbindungselements in der zweiten Richtung derart formschlüssig miteinander zu verbinden, dass dadurch ein Zusammenhalt der Funktionsmodule in der ersten Richtung realisiert ist. Auf diese Weise werden die Stabilität der Anlage sowie die Genauigkeit der Ausrichtung der einzelnen Funktionsmodule zueinander verbessert.

In einer weiteren vorteilhaften Weiterbildung der elektrischen Anlage ist durch die ersten Schenkel benachbarter Module ein stumpfer Stoß gebildet, welcher durch das aufsteckbare Verbindungselement zumindest teilweise abgedeckt ist. Ein stumpfer Stoß, bei dem die ersten Schenkel benachbart angeordneter Module mit ihren einander zugewandten Stirnseiten stumpf, d.h. ohne Überlappung, aneinander stoßen, ist ohne großen Aufwand realisierbar und äußerst einfach zu montieren - insbesondere bei beengten Platzverhältnissen. Jedoch können bei stumpfen Stößen Dichtigkeitsprobleme auftreten. Indem das aufsteckbare Verbindungselement diesen Bereich zumindest teilweise abdeckt, werden dadurch bedingte Dichtigkeitsprobleme wirksam vermieden. Darüber hinaus ist hierfür kein zusätzliches Bauteil - und damit kein zusätzlicher Montageschritt - erforderlich, was sich vorteilhaft auf die Montage- und Herstellkosten auswirkt.

In einer weiteren vorteilhaften Weiterbildung der elektrischen Anlage ist diese modular um weitere Funktionsmodule sowie um weitere Module des Druckentlastungskanals erweiterbar.

Auf diese Weise ist die elektrische Anlage beliebig erweiterbar und dabei an beliebige Konfigurationen anpassbar.

Das erfindungsgemäße Verfahren zur Montage eines Druckentlastungskanals einer elektrischen Anlage vorstehend beschriebener Art weist die Schritte:
a) Einstecken eines ersten Moduls des Druckentlastungskanals in eine an einer Oberseite eines Gehäuses eines dem ersten Modul zugeordneten ersten Funktionsmoduls ausgebildete erste Aufnahme unter Bildung einer ersten schraubenlosen Verbindung, die sich in einer ersten Richtung (R1) erstreckt,
b) Einstecken eines zweiten Moduls des Druckentlastungskanals in eine an einer Oberseite eines Gehäuses eines dem zweiten Modul zugeordneten zweiten Funktionsmoduls ausgebildete zweite Aufnahme unter Bildung einer weiteren ersten schraubenlosen Verbindung, die sich in der ersten Richtung (R1) erstreckt,
c) Justieren des zweiten Moduls relativ zum ersten Modul, so dass eine Lasche des zweiten Moduls mit dem ersten Modul derart überlappt, dass hierdurch eine zweite schraubenlose Verbindung gebildet wird, welche sich in einer quer zur ersten Richtung (R1) orientierten zweiten Richtung (R2) erstreckt,
auf. Mit Hilfe des erfindungsgemäßen Verfahrens ist eine Montage des Druckentlastungskanals auf dem Gehäuse der Funktionsmodule auf einfache und ergonomische Art und Weise von vorne, d.h. von der Front- oder Bedienseite der elektrischen Anlage aus, ausführbar, ohne dass dabei im hinteren, rückwärtigen Bereich der elektrischen Anlage Schraubverbindungen zwischen den Gehäusen und den Modulen des Druckentlastungskanals auszuführen wären. Dies ist insbesondere im Falle stark beengter Platzverhältnisse vorteilhaft, da mit Hilfe dieses Verfahrens auch Anlagen projektierbar sind, die ansonsten - bei herkömmlicher Schraub-Montage des Druckentlastungkanals - aufgrund des durch die Deckenhöhe stark begrenzten Bauraumes - und damit der Unzugänglichkeit der hinten liegenden Verbindung - so nicht realisierbar wären.

In einer vorteilhaften Weiterbildung weist das Verfahren den weiteren Schritt:
d) Montage eines in der zweiten Richtung (R2) auf die Gehäuse benachbarter Funktionsmodule aufsteckbaren Verbindungselements, welches die Funktionsmodule in der ersten Richtung zusammenhält und eine Berührungslinie des ersten Moduls mit dem zweiten Modul zumindest teilweise abdeckt,
auf. Durch die Montage des Verbindungselements, d.h. durch Aufstecken des Verbindungselements in der zweiten Richtung, werden zwei benachbart nebeneinander angeordnete Funktionsmodule der elektrischen Anlage derart formschlüssig miteinander verbunden, dass dadurch ein Zusammenhalten der Funktionsmodule in der ersten Richtung realisiert ist. Auf diese Weise werden die Stabilität der Anlage sowie die Genauigkeit der Ausrichtung der einzelnen Funktionsmodule zueinander verbessert.

Im Folgenden werden Ausführungsbeispiele der elektrischen Anlage unter Bezug auf die beigefügten Figuren näher erläutert. In den Figuren sind:
- Figur 1: eine schematische, perspektivische Darstellung einer Gesamtansicht einer elektrischen Anlage;
- Figuren 2A bis 2C: schematische Darstellungen des prinzipiellen Aufbaus eines Moduls des Druckentlastungskanals;
- Figuren 3A bis 3F: schematische Darstellungen eines Montagevorgangs des Druckentlastungskanals;
- Figur 4: eine schematische Detaildarstellung der zweiten schraubenlosen Verbindung;
- Figuren 5A bis 5C: schematische Detaildarstellungen des Verbindungselements.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

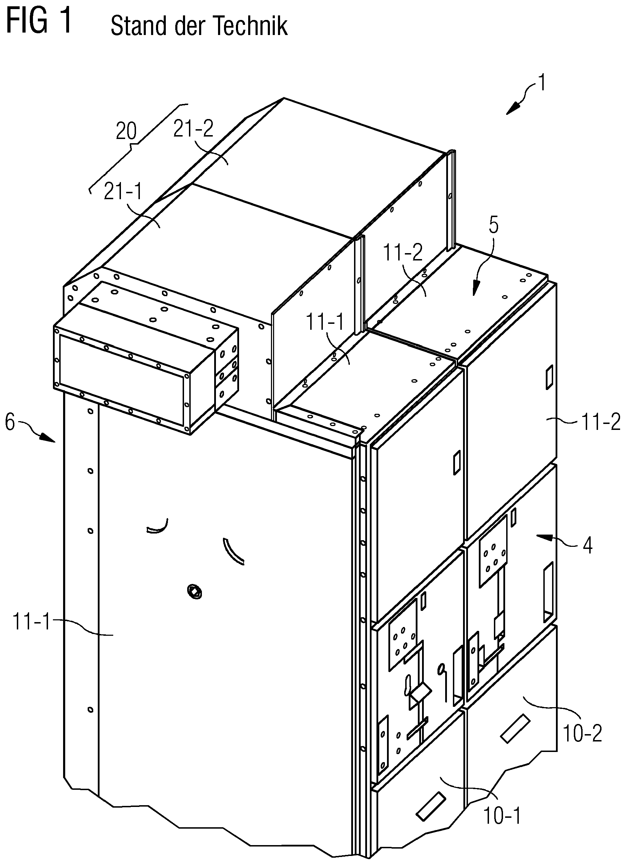

In Figur 1 ist eine perspektivische Gesamtansicht einer aus dem Stand der Technik bekannten elektrischen Anlage 1, welche vorliegend als Mittelspannungsschaltanlage ausgebildet ist, schematisch dargestellt. Die elektrische Anlage 1 weist ein erstes Funktionsmodul 10-1 mit einem ersten Gehäuse 11-1, sowie ein zweites Funktionsmodul 10-2 mit einem zweiten Gehäuse 11-2 auf. Jedes der Funktionsmodule 10-1 und 10-2 weist eine Frontseite 4 auf, über die das jeweilige Funktionsmodul 10-1 bzw. 10-2 manuell betätigbar ist. Der Frontseite gegenüberliegend befindet sich die Rückseite 6 des jeweiligen Funktionsmoduls 10-1 bzw. 10-2. An einer Oberseite 5 der Gehäuse 11-1 bzw. 11-2 ist ein Druckentlastungskanal 20 angeordnet. Dabei ist ein erstes Modul 21-1 des Druckentlastungskanals 20 dem ersten Funktionsmodul 10-1 zugeordnet. Ein zweites Modul 21-2 des Druckentlastungskanals 20 ist dem zweiten Funktionsmodul 10-2 zugeordnet. Die Module 21-1 und 21-2 des Druckentlastungskanals 20 sind mehrteilig aufgebaut und mit einer Mehrzahl an Schraubverbindung an der Oberseite 5 des jeweiligen Gehäuses 11-1 bzw. 11-2 montiert.

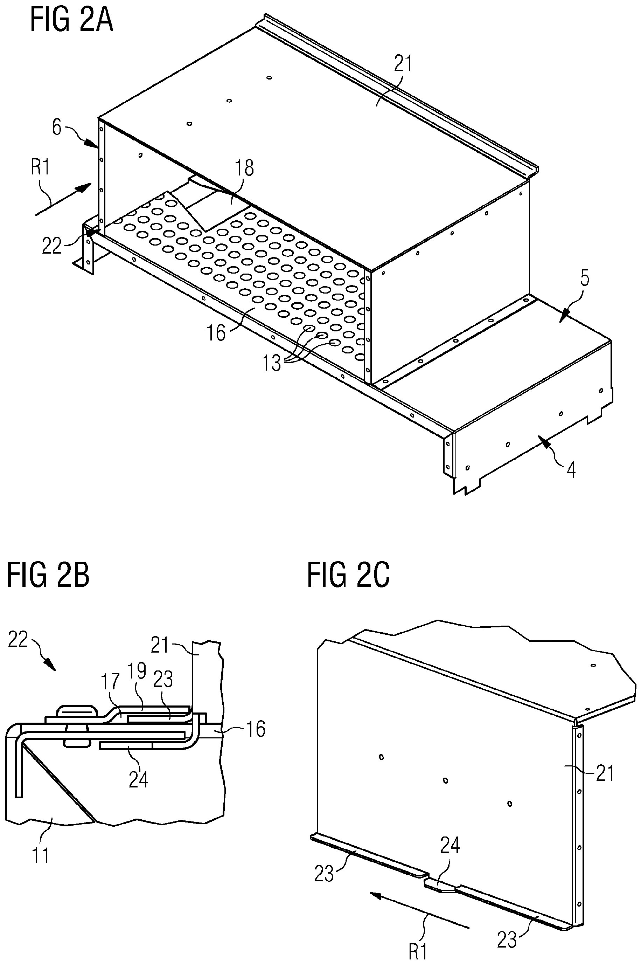

In den Figuren 2A bis 2C ist der prinzipielle Aufbau eines Moduls 21 des Druckentlastungskanals 20 sowie dessen Befestigung an einem Gehäuse 11 eines Funktionsmoduls 10 der erfindungsgemäßen elektrischen Anlage 1 schematisch dargestellt. Figur 2A zeigt dabei eine perspektivische Darstellung des Moduls 21, welches an der Oberseite 5 des Gehäuses 11 montiert ist. Das Modul 21 wird dabei auf einer Abdeckung 16, welche die Oberseite 5 des Gehäuses 11 bildet, montiert. Die Abdeckung 16 wird dabei auch als "Basis" des Druckentlastungskanals 20 oder auch - entsprechend ihrer Funktion als Bauteil des Gehäuses 11 - als "Sammelschienenabdeckung" bezeichnet. Sie weist eine Vielzahl von Austrittsöffnungen 13 auf, durch die im Falle einer Druckbeaufschlagung des Funktionsmoduls 10 - beispielsweise durch einen in der elektrischen Anlage auftretenden Störlichtbogen - die dabei entstehenden heißen Gase aus dem Gehäuse 11 heraus in den Druckentlastungskanal 20 entweichen können. In einem der Frontseite 4 abgewandten, hinteren Bereich der Abdeckung 16 ist eine erste schraubenlose Verbindung 22 des Moduls 21 mit der Abdeckung 16 gebildet.

In den Figuren 2A und 2B ist diese erste schraubenlose Verbindung 22 detailliert dargestellt. Hierzu weist das Modul 21 eine nach hinten orientierte Stecklasche 23 auf, welche in eine am Gehäuse 11 ausgebildete Aufnahme 17 eingesteckt ist. Die Aufnahme 17 ist dabei mittels einer Leiste 19, die mit der Abdeckung 16 verschraubt ist, realisiert. Die Leiste 19 ist z-förmig abgewinkelt, wobei ein erster Schenkel, der unmittelbar auf dem Gehäuse 11 aufliegt, zur Verschraubung mit dem Gehäuse 11 dient. Ein zweiter Schenkel der Lasche 19 weist zum Gehäuse 11 einen vordefinierten Abstand auf, wodurch die Aufnahme 17 gebildet ist. Vorliegend stellt die Aufnahme 17 somit ein zwischen der Leiste 19 und dem Gehäuse 11 ausgebildeter Aufnahmeraum dar, in den die Stecklasche 23 zur Montage des Druckentlastungskanals 20 einsteckbar ist. Auf diese Weise ist im hinteren Bereich eine von vorne montierbare, in vertikaler Richtung wirkende, formschlüssige schraubenlose Verbindung zwischen dem Modul 21 und dem Gehäuse 11 realisierbar. Es sind jedoch auch andere konstruktive Ausführungsformen der Aufnahme 17 - beispielsweise durch im oberen Gehäusebereich ausgebildete Schlitze, in die eine Stecklasche 23 einsteckbar ist - möglich.

Die Leiste 19 sowie die Stecklasche 23, und damit die erste schraubenlose Verbindung 22, erstrecken sich dabei in einer ersten Richtung R1. Zur Zentrierung des Moduls 21 in dieser ersten Richtung R1 weist die Abdeckung 16 eine konisch ausgebildete Zentrieröffnung 18 auf, welche im montierten Zustand mit einem Zentriermittel 24 des Moduls 21 im Eingriff steht. Bei dem Zentriermittel 24 handelt es sich um eine weitere, nach hinten gebogene Lasche, welche die Abdeckung 16 im montierten Zustand untergreift. Bei der Montage, d.h. beim Verschieben des Moduls 21 nach hinten, d.h. in Richtung einer von der Frontseite 4 abgewandten Rückseite des Gehäuses 11, wird das Modul 21 über das in der nach hinten konisch zulaufende Zentrieröffnung 18 geführte Zentriermittel 24 in der ersten Richtung R1 zentriert.

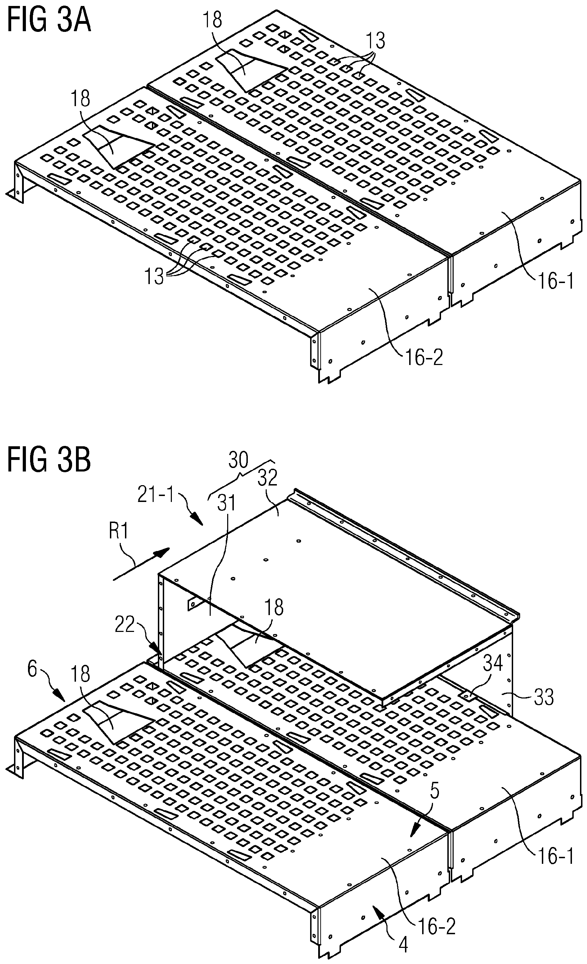

In den Figuren 3A bis 3F ist ein Montagevorgang des Druckentlastungskanals 20 im Falle zweier nebeneinander angeordneter Funktionsmodule 10 schematisch dargestellt. Die Montage erfolgt dabei "von vorne", d.h. von der Frontseite 4 der elektrischen Anlage 1 aus, ohne dass dabei im hinteren, der Frontseite 4 abgewandten Bereich Schraub- oder Nietverbindung erforderlich sind. Dabei sind lediglich die beiden Abdeckungen 16-1 und 16-2 der Gehäuse 11-1 und 11-2 zweier nebeneinander angeordneter Funktionsmodule 10-1 und 10-2 dargestellt. Die übrigen Komponenten der Funktionsmodule 10-1 und 10-2 (siehe Fig.1) wurden der Übersichtlichkeit halber weggelassen.

Figur 3A zeigt die beiden Abdeckungen 16-1 und 16-2 der Gehäuse 11-1 und 11-2 zweier Funktionsmodule 10-1 und 10-2. Die Funktionsmodule 10-1 und 10-2 sind dabei derart zueinander positioniert, dass sie unmittelbar - d.h. ohne einen nennenswerten Abstand - benachbart, d.h. Seite an Seite, bündig nebeneinander angeordnet sind.

In Figur 3B ist ein erstes Modul 21-1 auf der dem Modul 21-1 zugeordneten Abdeckung 16-1 montiert. Im hinteren, der Frontseite 4 abgewandten Bereich ist durch einstecken der Stecklasche 23 in die zugeordnete Aufnahme 17 (siehe Fig.2B) eine erste schraubenlose Verbindung 22 gebildet, welche sich in der Richtung R1 erstreckt. Das Modul 21-1 weist dabei einen L-förmigen Grundkörper 30 mit einem ersten Schenkel 31 und einem zweiten Schenkel 32 auf. An dem Grundkörper 30 ist eine Seitenwand 33 an den beiden Schenkeln 31 und 32 befestigt, beispielsweise mittels Schrauben oder Nieten. Die Seitenwand 33 kann dabei bereits vormontiert sein, d.h. sie ist bereits vor der Montage des Moduls 21-1 auf der Abdeckung 16-1 mit dem Grundkörper 30 verbunden. Zur Verbindung mit der Abdeckung 16-1 sind an der Seitenwand 33 mehrere Haken 34 ausgebildet, welche beim Verschieben der Seitenwand 33 nach hinten, d.h. in Richtung der Rückseite 6, in an der Abdeckung 16-1 in entsprechender Anzahl befestigte, pilzförmige Köpfe (nicht dargestellt) eingreifen und eine formschlüssige Verbindung in der ersten Richtung R1 bilden. Die Zentrierung des ersten Moduls 21-1 relativ zur ersten Abdeckung 16-1 erfolgt dabei wiederum beim Verschieben des Moduls 21-1 nach hinten über das in der Zentrieröffnung 18 geführte Zentriermittel 24 (siehe Fig.2A-2C).

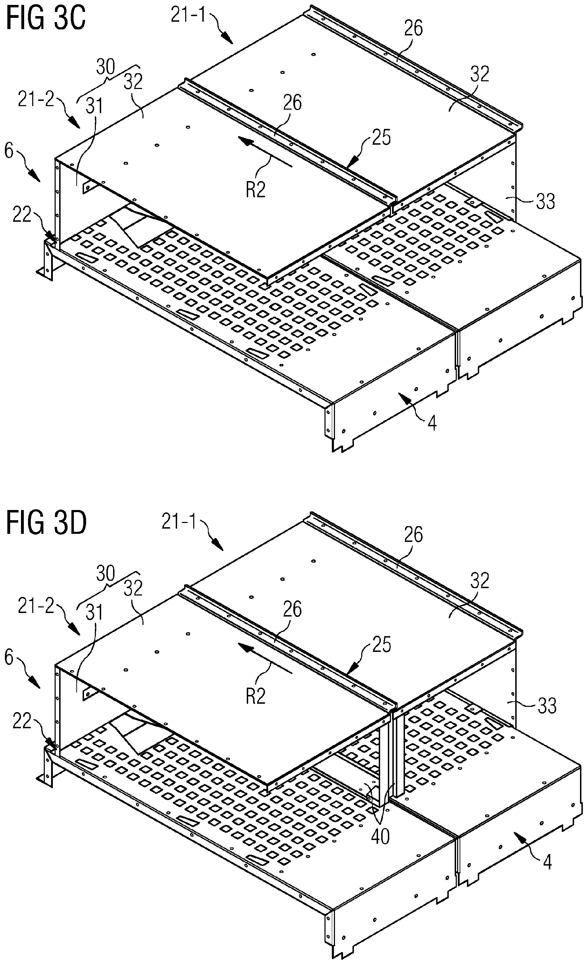

In Figur 3C ist neben dem ersten Modul 21-1 ein zweites Modul 21-2 auf der dem Modul 21-2 zugeordneten Abdeckung 16-2 montiert. Das zweite Modul 21-2 weist einen zum Grundkörper 30 des ersten Moduls 21-1 baugleichen L-förmigen Grundkörper 30 auf, welcher wiederum aus einem ersten Schenkel 31 und einem zweiten Schenkel 32 besteht. Das zweite Modul 21-2 ist, ebenso wie das zuvor montierte Modul 21-1, durch Einstecken der Stecklasche 23 in die zugeordnete Aufnahme 17 unter Ausbildung einer weiteren ersten schraubenlosen Verbindung 22 an der dem Modul 21-2 zugeordneten Abdeckung 16-2 montiert. Die Zentrierung in der ersten Richtung R1 erfolgt wiederum durch das in der Zentrieröffnung 18 geführte Zentriermittel 24 des zweiten Moduls 21-2. Am zweiten Schenkel 32 des zweiten Moduls 21-2 ist eine Lasche 26 ausgebildet, welche mit dem zweiten Schenkel 32 des ersten Moduls 21-1 überlappt, wodurch eine zweite schraubenlose Verbindung 25 gebildet ist, welche sich in einer zweiten Richtung R2 erstreckt. Zur Verbesserung der Stabilität sowie der Dichtigkeit der zweiten schraubenlosen Verbindung 25 kann die Lasche 26 sowie der mit der Lasche 26 überlappende Bereich des zweiten Schenkels 32 des ersten Moduls 21-1 profiliert ausgebildet sein. Zur weiteren Verbesserung der Dichtigkeit der zweiten schraubenlosen Verbindung 25 kann zwischen der Lasche 26 und dem mit der Lasche 26 überlappende Bereich des ersten Moduls 21-1 ein Dichtmittel, beispielsweise ein Filzelement oder eine Kunststoffdichtung, eingebracht sein.

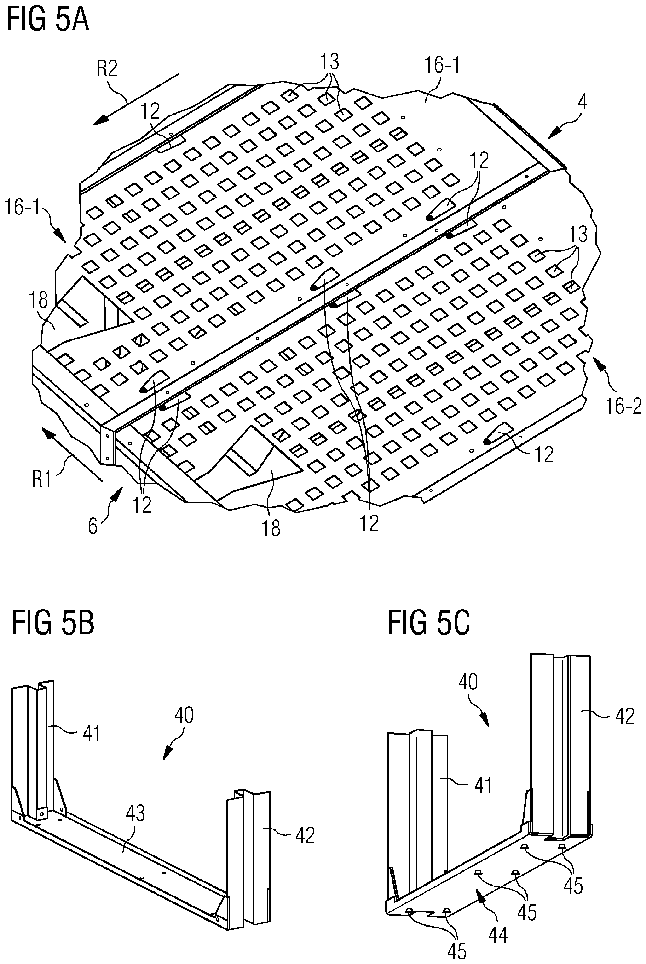

Figur 3D zeigt den Montagevorgang des Druckentlastungskanals 20 nach der Montage eines Verbindungselements 40. Das Verbindungselement 40 weist dabei eine im Wesentlichen u-förmige Form, bestehend aus einem ersten Schenkel 41, einem zweiten Schenkel 42 sowie einem die beiden Schenkel 41 und 42 verbindenden Verbindungsbereich 43 auf. Das Verbindungselement 40 wird ebenfalls schraubenlos durch Verschieben nach hinten, d.h. in der zweiten Richtung R2, an den Abdeckungen 16-1 und 16-2 montiert (siehe Fig.5A-5C). Es dient im Wesentlichen dazu, die Gehäuse 11-1 und 11-2 der zueinander benachbart angeordneten Funktionsmodule 10-1 und 10-2 miteinander zu verbinden. Darüber hinaus dient das Verbindungselement 40 dazu, den an der Rückseite 6 des Druckentlastungskanals 20 auftretenden stumpfen Stoß zwischen den Stirnseiten der ersten Schenkel 31 des ersten Moduls 21-1 sowie des zweiten Moduls 21-2 abzudecken. Auf diese Weise können etwaig auftretende Dichtigkeitsprobleme in diesem Bereich wirksam verhindert werden. Auch wird durch das schraubenlose Montieren des Verbindungselements 40 durch Aufstecken und Verrasten mit den Abdeckungen 16-1 und 16-2 eine einfache Montage "von vorne" ermöglicht. Darüber hinaus trägt das Verbindungselement 40 auch zur Stabilität des Druckentlastungskanals 20 bei.

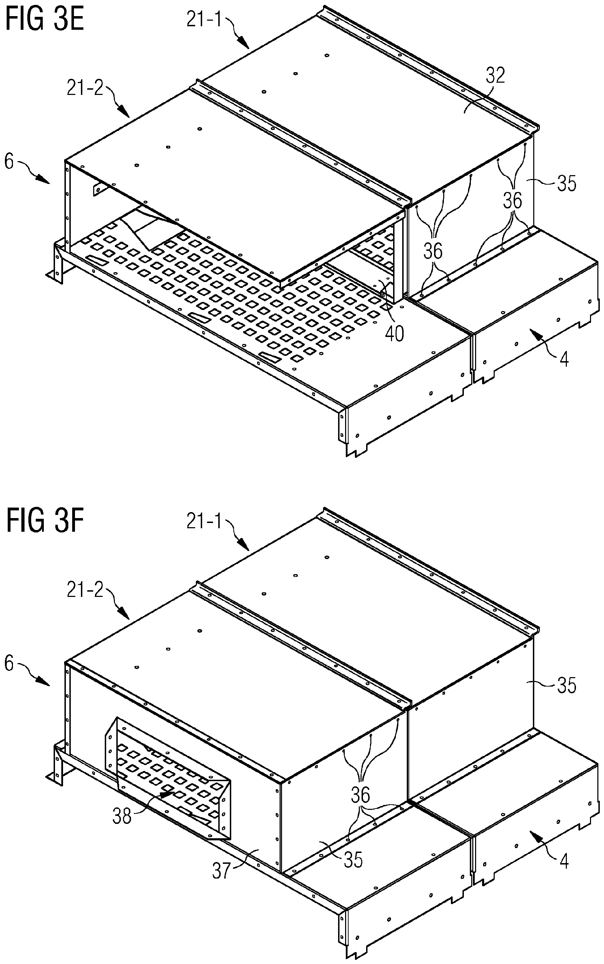

In Figur 3E ist der Druckentlastungskanal 20 um eine erste Frontwand 35 erweitert. Da diese von vorne montiert wird, kann die Verbindung mit der Abdeckung 16-1 sowie dem zweiten Schenkel 32 des Grundkörpers 30 des ersten Moduls 21-1 mit Hilfe mehrerer Schraubverbindungen 36 erfolgen. Figur 3F zeigt den fertig montierten Druckentlastungskanal 20. Dabei ist auch das zweite Modul 21-2 um eine weitere Frontwand 35 ergänzt. Seitlich ist das zweite Modul 21-2 mittels eines Endstücks 37 verschlossen. Das Endstück 37 weist dabei eine Auslasskanal-Öffnung 38 auf, an die ein Auslasskanal (nicht dargestellt) anschließbar ist, um die bei einer Auslösung eines Funktionsmoduls 10-1 bzw. 10-2 der elektrischen Anlage 1 entstehenden heißen Gase auszuleiten.

Der in den Figuren 3A bis 3F dargestellte Montagevorgang ist beispielhaft anhand zweier nebeneinander angeordneter Funktionsmodule 10-1 und 10-2 beschrieben. Es ist jedoch ebenso möglich, die elektrische Anlage um weitere Funktionsmodule 10 zu erweitern. Entsprechend ist der Druckentlastungskanal 20 um weitere Module 21 zu erweitern, wobei die in den Figuren 3C bis 3E dargestellten Schritte entsprechend oft zu wiederholen sind. Die "mittleren" Module 21 des Druckentlastungskanals 20 sind dabei im Wesentlichen baugleich, wobei sie sich hinsichtlich ihrer Breite unterscheiden können. Lediglich das erste Modul 21-1 sowie das letzte Modul 21-2 weisen Unterschiede auf: das erste Modul 21-1 weist eine Seitenwand 33 auf, welche den Druckentlastungskanal 20 in der ersten Richtung R1 abschließt, und das letzte Modul 21-2 weist ein Endstück 37 mit einer Auslasskanal-Öffnung 38 auf, welches das letzte Modul 21-2 des Druckentlastungskanals 20 in der Gegenrichtung zur Richtung R1 abschließt.

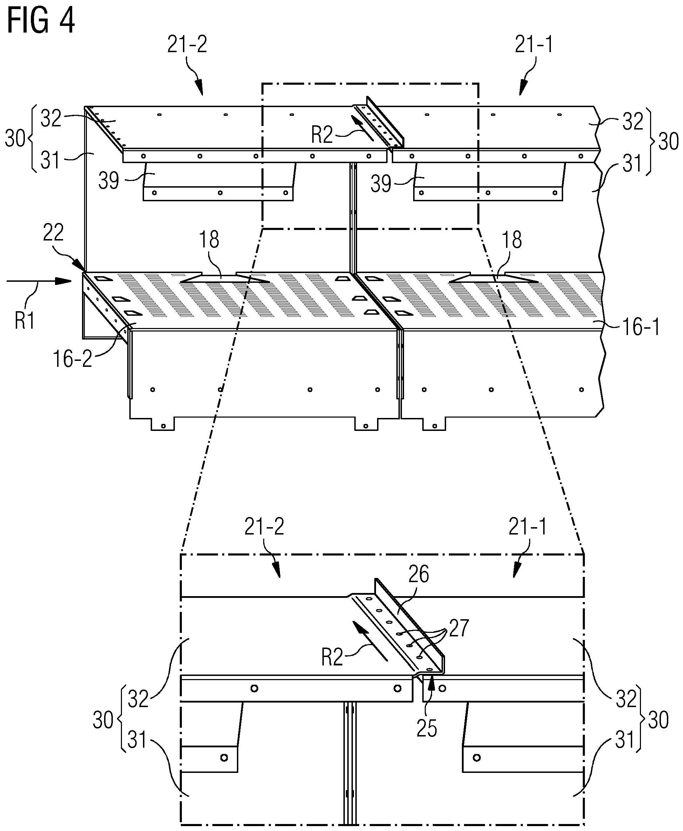

Figur 4 zeigt eine schematische Detaildarstellung der zweiten schraubenlosen Verbindung 24 zwischen dem ersten Modul 21-1 und dem zweiten Modul 21-2. Dabei ist das erste Modul 21-1 im hinteren Bereich in die dem ersten Modul 21-1 zugeordnete erste Abdeckung 16-1 eingesteckt, wodurch eine erste schraubenlose Verbindung 22 gebildet ist, welche sich in der Richtung R1 erstreckt. Ebenso ist das zweite Modul 21-2 in die dem zweiten Modul 21-2 zugeordnete zweite Abdeckung 16-2 eingesteckt, wodurch eine weitere erste schraubenlose Verbindung 22 gebildet ist, welche sich ebenfalls in der ersten Richtung R1 erstreckt. Zur Versteifung des Grundkörpers 30 weisen die Module 21-1 und 21-2 jeweils ein Stützelement 39 auf, welches jeweils den ersten Schenkel 31 und den zweiten Schenkel 32 des jeweiligen Moduls 21-1 bzw. 21-2 winkelig verbinden. Das Stützelement 39 kann beispielsweise an den beiden Schenkeln 31 und 32 angeschraubt oder angenietet sein.

Die zweite schraubenlose Verbindung 24, welche zwischen dem ersten Modul 21-1 und dem zweiten Modul 21-2 verläuft, ist als Überlappung der zweiten Schenkel 32 der L-förmigen Grundkörper 30 des ersten und zweiten Moduls 21-1 und 21-2 ausgebildet. Hierzu weist der zweite Schenkel 32 des zweiten Moduls 21-2 eine Lasche 26 auf, welche derart an den zweiten Schenkel 32 angeformt ist, dass sie mit dem zweiten Schenkel 32 des ersten Moduls 21-1 eine Überlappung bildet, welche sich in der zweiten Richtung R2 erstreckt. Zur Verbesserung der Dichtigkeit der zweiten schraubenlosen Verbindung 25 kann zwischen der Lasche 26 und dem mit der Lasche 26 überlappende Bereich des ersten Moduls 21-1 ein Dichtmittel, beispielsweise ein Filzelement oder eine Kunststoffdichtung, angeordnet sein. Die an der Lasche 26 in der zweiten Richtung R2 verlaufenden Bohrungen 27 dienen nicht der zusätzlichen Verschraubung mit dem zweiten Schenkel 32 des ersten Moduls 21-1, sondern sind dadurch bedingt, dass die Module 21-1 und 21-2 identisch ausgebildet sind: wird durch das betreffende Modul 21 das rechte Randelement des Druckentlastungskanals 20 gebildet, so dienen die in der Lasche 26 ausgebildeten Bohrungen 27 der Verschraubung der Seitenwand 33 (siehe Fig.3C).

Die Figuren 5A bis 5C zeigen in mehreren Ansichten schematische Detaildarstellungen des Verbindungselements 40, welche das erste Modul 21-1 und das daneben angeordnete zweite Modul 21-2 an der Oberseite 5 der Funktionsmodule 10-1 und 10-2 zusammenhält. In Figur 5A sind die erste Abdeckung 16-1 und die zweite Abdeckung 16-2 nebeneinander angeordnet perspektivisch dargestellt. Die Abdeckungen 16-1 und 16-2 weisen jeweils eine Vielzahl von Austrittsöffnungen 13 auf. Im Bereich der Rückseite 6, welche der Frontseite 4 gegenüber liegt, weisen die Abdeckungen 16-1 und 16-2 jeweils ihre Zentrieröffnung 18 auf. In einem Randbereich, in dem die erste Abdeckung 16-1 an die zweite Abdeckung 16-2 angrenzt, weisen die beiden Abdeckungen 16-1 und 16-2 mehrere Befestigungsöffnungen 12 auf, welche zur Aufnahme und Befestigung des Verbindungselements 40 ausgebildet sind.

In den Figuren 5B und 5C ist das Verbindungselement 40 in verschiedenen Ansichten perspektivisch dargestellt. Es ist im Wesentlichen u-förmig ausgebildet und weist einen ersten Schenkel 41 sowie einen zweiten Schenkel 42 auf, welche über einen Verbindungsbereich 43 miteinander verbunden sind. Die beiden Schenkel 41 und 42 sind dabei ihrerseits u-förmig profiliert ausgebildet, um die Bereiche, in denen das erste Modul 21-1 und das zweite Modul 21-2 unter Ausbildung eines stumpfen Stoßes aneinanderstoßen, sicher abzudecken. Bei der Montage der Module 21-1 und 21-2 können in diesen Bereichen fertigungsbedingte, d.h. herstellungs- oder montagebedingte Falze in das Innere des Druckentlastungskanals 20 reichen. Durch die u-förmige Profilierung der beiden Schenkel 41 und 42 ist sichergestellt, dass diese Falze durch das "U" aufgenommen werden und die äußeren Laschen der beiden Schenkel 41 und 42 dennoch bündig und plan an den Innenflächen des Druckentlastungskanals 20 anliegen. Auf diese Weise wird der Austritt heißer Gase in den Bereichen der stumpf aneinander stoßenden Module 21-1 und 21-2 des Druckentlastungskanals 20 wirksam unterbunden.

Zur Befestigung des Verbindungselements 40 an den beiden Abdeckungen 16-1 und 16-2 weist der Verbindungsbereich 43 an seiner Unterseite 44 mehrere pilzförmig ausgebildete Vorsprünge 45 auf, welche von oben in die Befestigungsöffnungen 12 der beiden Abdeckungen 16-1 und 16-2 einsteckbar sind. Da die Befestigungsöffnungen 12 in der zweiten Richtung R2 konisch zulaufend ausgeführt sind, wirken diese als Zentrierung, wenn das Verbindungselement 40 nach dem Einstecken der Vorsprünge 45 in die Befestigungsöffnungen 12 in der zweiten Richtung R2 verschoben wird. Auf diese Weise wird zum Einen eine Befestigung des Verbindungselements 40 an den beiden Abdeckungen 16-1 und 16-2 erreicht. Zum Anderen wird durch das Aufschieben des Verbindungselements 40 in der zweiten Richtung R2 gleichzeitig eine Zentrierung der beiden Abdeckungen 16-1 und 16-2 - und damit der beiden nebeneinander angeordneten Gehäuse 11-1- und 11-2 der beiden Funktionsmodule 10-1 und 10-2 - erreicht.

### Bezugszeichenliste

- 1: elektrische Anlage
- 4: Frontseite
- 5: Oberseite
- 6: Rückseite

- 10-1, 10-2: Funktionsmodul
- 11-1, 11-2: Gehäuse
- 12: Befestigungsöffnung
- 13: Austrittsöffnung
- 16: Abdeckung / Sammelschienenabdeckung
- 17: Aufnahme
- 18: Zentrieröffnung
- 19: Leiste
- 20: Druckentlastungskanal
- 21-1, 21-2: Modul
- 22: erste schraubenlose Verbindung
- 23: Stecklasche
- 24: Zentriermittel
- 25: zweite schraubenlose Verbindung
- 26: Lasche
- 27: Bohrung

- 30: Grundkörper
- 31: erster Schenkel
- 32: zweiter Schenkel
- 33: Seitenwand
- 34: Haken
- 35: Frontwand
- 36: Schraubverbindung
- 37: Endstück
- 38: Auslasskanal-Öffnung
- 39: Stützelement

- 40: Verbindungselement
- 41: erster Schenkel
- 42: zweiter Schenkel
- 43: Verbindungsbereich
- 44: Unterseite
- 45: Vorsprung

- R1: erste Richtung
- R2: zweite Richtung

## Patentansprüche

1. Elektrische Anlage (1), insbesondere gasisolierte Mittelspannungsschaltanlage, mit mindestens einem Funktionsmodul (10-1, 10-2), welches ein im Wesentlichen quaderförmiges Gehäuse (11-1, 11-2) aufweist, und einem sich parallel zu einer Frontseite (4) der elektrischen Anlage erstreckenden Druckentlastungskanal (20), welcher im Bereich einer Oberseite (5) des Gehäuses (11-1, 11-2) auf das Gehäuse (11-1, 11-2) aufgesetzt ist,
**dadurch gekennzeichnet,**
**dass** der Druckentlastungskanal (20) modular aufgebaut ist, wobei jedem Funktionsmodul (10-1, 10-2) ein entsprechendes Modul (21-1, 21-2) des Druckentlastungskanals (20) eindeutig zugeordnet ist, und
**dass** jedes Modul (21-1, 21-2) des Druckentlastungskanals (20) in einem der Frontseite (4) abgewandten hinteren Bereich des dem jeweiligen Modul (21-1, 21-2) zugeordneten Funktionsmoduls (10-1, 10-2) in das Gehäuse (11-1, 11-2) des jeweils zugeordneten Funktionsmoduls (10-1, 10-2) eingesteckt ist, wodurch eine erste schraubenlose Verbindung (22) gebildet ist.

2. Elektrische Anlage (1) nach Anspruch 1,
**dadurch gekennzeichnet,**
**dass** die erste schraubenlose Verbindung (22) sich im Wesentlichen in einer zur Frontseite (4) parallel orientierten ersten Richtung (R1) an dem ersten Modul (21-1, 21-2) erstreckt und zumindest ein Zentriermittel (24) zur Selbstzentrierung in der ersten Richtung (R1) aufweist.

3. Elektrische Anlage (1) nach einem der vorhergehenden Ansprüche,
**dadurch gekennzeichnet,**
**dass** jedes der Module (21-1, 21-2) des Druckentlastungskanals (20) eine Lasche (26) aufweist, über die das betreffende Modul (21-1, 21-2) mit dem benachbart angeordneten Modul (21-1, 21-2) schraubenlos verbindbar ist, wodurch eine zweite schraubenlose Verbindung (25) gebildet ist.

4. Elektrische Anlage (1) nach einem der vorhergehenden Ansprüche,
**dadurch gekennzeichnet,**
**dass** die Module (21-1, 21-2) einen L-förmigen Grundkörper (30) mit einem ersten Schenkel (31) und einem zweiten Schenkel (32) aufweisen, wobei die erste schraubenlose Verbindung (22) jeweils am ersten Schenkel (31) und die zweite schraubenlose Verbindung (25) jeweils am zweiten Schenkel (32) des L-förmigen Grundkörpers (30) ausgebildet sind.

5. Elektrische Anlage (1) nach Anspruch 4, rückbezogen auf Anspruch 3,
**dadurch gekennzeichnet,**
**dass** die zweite schraubenlose Verbindung (25) sich an dem zweiten Schenkel (32) im Wesentlichen in einer quer zur ersten Richtung (R1) orientierten zweiten Richtung (R2) erstreckt.

6. Elektrische Anlage (1) nach einem der Ansprüche 3 bis 5,
**dadurch gekennzeichnet,**
**dass** die zweite schraubenlose Verbindung (25) als Überlappung ausgebildet ist.

7. Elektrische Anlage (1) nach einem der Ansprüche 3 bis 6,
**dadurch gekennzeichnet,**
**dass** die zweite schraubenlose Verbindung (25) ein zusätzliches Dichtmittel aufweist.

8. Elektrische Anlage (1) nach einem der Ansprüche 3 bis 7,
**dadurch gekennzeichnet,**
**dass** benachbarte Funktionsmodule (10-1, 10-2) mit Hilfe eines in der zweiten Richtung (R2) aufsteckbaren Verbindungselements (40) verbindbar sind.

9. Elektrische Anlage (1) nach Anspruch 8,
**dadurch gekennzeichnet,**
**dass** durch die ersten Schenkel (31) benachbarter Module (21-1, 21-2) ein stumpfer Stoß gebildet ist, welcher durch das aufsteckbare Verbindungselement (40) zumindest teilweise abgedeckt ist.

10. Elektrische Anlage (1) nach einem der Ansprüche 3 bis 9,
**dadurch gekennzeichnet,**
**dass** die elektrische Anlage (1) um weitere Funktionsmodule sowie um weitere Module des Druckentlastungskanals (20) modular erweiterbar ist.

11. Verfahren zur Montage eines Druckentlastungskanals (20) einer elektrischen Anlage (1), welche nach einem der vorstehenden Ansprüche ausgebildet ist, mit den Schritten:
a) Einstecken eines ersten Moduls (21-1) des Druckentlastungskanals (20) in eine an einer Oberseite (5) eines Gehäuses (11-1) eines dem ersten Modul (21-1) zugeordneten ersten Funktionsmoduls (10-1) ausgebildete erste Aufnahme (17) unter Bildung einer ersten schraubenlosen Verbindung (22), die sich in einer ersten Richtung (R1) erstreckt;
b) Einstecken eines zweiten Moduls (21-2) des Druckentlastungskanals (20) in eine an der Oberseite (5) eines Gehäuses (11-2) eines dem zweiten Modul (21-2) zugeordneten zweiten Funktionsmoduls (10-2) ausgebildete zweite Aufnahme (17) unter Bildung einer weiteren ersten schraubenlosen Verbindung (22), die sich in der ersten Richtung (R1) erstreckt;
c) Justieren des zweiten Moduls (21-2) relativ zum ersten Modul (21-1), so dass eine Lasche (26) des zweiten Moduls (21-2) mit dem ersten Modul (21-1) derart überlappt, dass hierdurch eine zweite schraubenlose Verbindung (25) gebildet wird, welche sich in einer quer zur ersten Richtung (R1) orientierten zweiten Richtung (R2) erstreckt.

12. Verfahren nach Anspruch 11, mit dem weiteren Schritt:
d) Montage eines in der zweiten Richtung (R2) auf die Gehäuse (11-1, 11-2) benachbarter Funktionsmodule (10-1, 10-2) aufsteckbaren Verbindungselements (40), welches die Funktionsmodule (10-1, 10-2) in der ersten Richtung (R1) zusammenhält und eine Berührungslinie des ersten Moduls (21-1) mit dem zweiten Modul (21-2) zumindest teilweise abdeckt.

## Claims

1. Electrical assembly (1), in particular gas-insulated medium-voltage switchgear assembly, comprising at least one functional module (10-1, 10-2) which has a substantially cuboidal housing (11-1, 11-2), and a pressure-relief channel (20) which extends parallel to a front side (4) of the electrical assembly and is mounted onto the housing (11-1, 11-2) in the region of a top side (5) of the housing (11-1, 11-2),
**characterized**
**in that** the pressure-relief channel (20) is of modular construction, wherein a corresponding module (21-1, 21-2) of the pressure-relief channel (20) is unambiguously associated with each functional module (10-1, 10-2), and
**in that** each module (21-1, 21-2) of the pressure-relief channel (20) in a rear region, which is averted from the front side (4), of the functional module (10-1, 10-2) which is associated with the respective module (21-1, 21-2) is inserted into the housing (11-1, 11-2) of the respectively associated functional module (10-1, 10-2), as a result of which a first screw-free connection (22) is formed.

2. Electrical assembly (1) according to Claim 1,
**characterized**
**in that** the first screw-free connection (22) extends substantially in a first direction (R1), which is oriented parallel to the front side (4), on the first module (21-1, 21-2) and has at least one centring means (24) for self-centring in the first direction (R1).

3. Electrical assembly (1) according to either of the preceding claims,
**characterized**
**in that** each of the modules (21-1, 21-2) of the pressure-relief channel (20) has a lug (26) by means of which the module (21-1, 21-2) in question can be connected in a screw-free manner to the adjacent module (21-1, 21-2), by means of which a second screw-free connection (25) is formed.

4. Electrical assembly (1) according to one of the preceding claims,
**characterized**
**in that** the modules (21-1, 21-2) have an L-shaped main body (30) with a first limb (31) and a second limb (32), wherein the first screw-free connection (22) is respectively formed on the first limb (31) and the second screw-free connection (25) is respectively formed on the second limb (32) of the L-shaped main body (30).

5. Electrical assembly (1) according to Claim 4, referring back to Claim 3,
**characterized**
**in that** the second screw-free connection (25) extends substantially in a second direction (R2), which is oriented transverse to the first direction (R1), on the second limb (32).

6. Electrical assembly (1) according to one of Claims 3 to 5,
**characterized**
**in that** the second screw-free connection (25) is formed as an overlap.

7. Electrical assembly (1) according to one of Claims 3 to 6,
**characterized**
**in that** the second screw-free connection (25) has an additional sealing means.

8. Electrical assembly (1) according to one of Claims 3 to 7,
**characterized**
**in that** adjacent functional modules (10-1, 10-2) can be connected with the aid of a connection element (40) which can be mounted in the second direction (R2).

9. Electrical assembly (1) according to Claim 8,
**characterized**
**in that** a butt joint is formed by the first limb (31) of adjacent modules (21-1, 21-2), which butt joint is at least partially covered by the mountable connecting element (40).

10. Electrical assembly (1) according to one of Claims 3 to 9,
**characterized**
**in that** the electrical assembly (1) can be extended in a modular manner by further functional modules and by further modules of the pressure-relief channel (20).

11. Method for assembling a pressure-relief channel (20) of an electrical assembly (1) which is formed according to one of the preceding claims, the method comprising the steps of:
a) inserting a first module (21-1) of the pressure-relief channel (20) into a first receptacle (17) which is formed on a top side (5) of a housing (11-1) of a first functional module (10-1) which is associated with the first module (21-1), so as to form a first screw-free connection (22) which extends in a first direction (R1);
b) inserting a second module (21-2) of the pressure-relief channel (20) into a second receptacle (17) which is formed on the top side (5) of a housing (11-2) of a second functional module (10-2) which is associated with the second module (21-2), so as to form a further first screw-free connection (22) which extends in the first direction (R1);
c) adjusting the second module (21-2) relative to the first module (21-1), so that a lug (26) of the second module (21-2) overlaps with the first module (21-1) in such a way that a second screw-free connection (25) is formed as a result, the said second screw-free connection extending in a second direction (R2) which is oriented transverse to the first direction (R1).

12. Method according to Claim 11, comprising the further step of:
d) fitting a connecting element (40) which can be mounted onto the housings (11-1, 11-2) of adjacent functional modules (10-1, 10-2) in the second direction (R2) and which holds the functional modules (10-1, 10-2) together in the first direction (R1) and at least partially covers a contact line of the first module (21-1) with second module (21-2).

## Revendications

1. Installation électrique (1), en particulier une installation de commutation de tension moyenne isolée des gaz, avec au moins un module fonctionnel (10-1,10-2), lequel présente un logement pour l'essentiel parallélépipédique (11-1, 11-2), et un canal de décharge de pression (20) s'étendant parallèlement à une face frontale (4) de l'installation électrique, lequel canal est installé dans la zone d'une face supérieure (5) du logement (11-1, 11-2) sur le logement (11-1, 11-2), **caractérisé en ce que** le canal de décharge de pression (20) a une structure modulaire, dans laquelle à chaque module fonctionnel (10-1, 10-2) est associé clairement un module (21-1, 21-2) correspondant du canal de décharge de pression (20), et **en ce que** chaque module (21-1, 21-2) du canal de décharge de pression (20) dans une zone arrière, opposée à la face frontale (4), du module fonctionnel (10-1, 10-2) associé au module (21-1, 21-2) respectif est inséré dans le logement (11-1, 11-2) du module fonctionnel (10-1, 10-2) respectivement associé, moyennant quoi une première liaison sans vis (22) est formée.

2. Installation électrique (1) selon la revendication 1, **caractérisée en ce que** la première liaison sans vis (22) s'étend pour l'essentiel dans une première direction (R1) orientée parallèlement à la face frontale (4) au niveau du premier module (21-1, 21-2) et présente au moins un moyen de centrage (24) destiné à se centrer lui-même dans la première direction (R1).

3. Installation électrique (1) selon l'une des revendications précédentes, **caractérisée en ce que** chacun des modules (21-1, 21-2) du canal de décharge de pression (20) présente une patte (26), par l'intermédiaire de laquelle le module (21-1, 21-2) concerné peut être relié sans vis au module (21-1, 21-2) disposé de manière adjacente, moyennant quoi une deuxième liaison sans vis (25) est formée.

4. Installation électrique (1) selon l'une des revendications précédentes, **caractérisée en ce que** les modules (21-1, 21-2) présentent un corps de base en forme de L (30) avec une première branche (31) et une deuxième branche (32), dans laquelle la première liaison sans vis (22) est configurée respectivement au niveau de la première branche (31) et la deuxième liaison sans vis (25) est configurée respectivement au niveau de la deuxième branche (32) du corps de base en forme de L (30).

5. Installation électrique (1) selon la revendication 4, en référence à la revendication 3, **caractérisée en ce que** la deuxième liaison sans vis (25) s'étend au niveau de la deuxième branche (32) pour l'essentiel dans une deuxième direction (R2) orientée transversalement par rapport à la première direction (R1).

6. Installation électrique (1) selon l'une des revendications 3 à 5, **caractérisée en ce que** la deuxième liaison sans vis (25) est configurée en tant que chevauchement.

7. Installation électrique (1) selon l'une des revendications 3 à 6, **caractérisée en ce que** la deuxième liaison sans vis (25) présente un moyen d'étanchéité supplémentaire.

8. Installation électrique (1) selon l'une des revendications 3 à 7, **caractérisée en ce que** des modules fonctionnels adjacents (10-1, 10-2) peuvent être reliés à l'aide d'un élément de liaison pouvant être inséré (40) dans la deuxième direction (R2).

9. Installation électrique (1) selon la revendication 8, **caractérisée en ce que** par le biais des premières branches (31) des modules voisins (21-1, 21-2) un joint à angle obtus est formé, lequel est recouvert au moins partiellement par le biais de l'élément de liaison pouvant être inséré (40).

10. Installation électrique (1) selon l'une des revendications 3 à 9, **caractérisé en ce que** l'installation électrique (1) peut être élargie à des modules fonctionnels supplémentaires ainsi qu'à des modules supplémentaires du canal de décharge de pression (20).

11. Procédé destiné au montage d'un canal de décharge de pression (20) d'une installation électrique (1), laquelle est configurée selon l'une des revendications précédentes, avec les étapes consistant à :
a) insérer un premier module (21-1) du canal de décharge de pression (20) dans une première partie de réception (17) configurée au niveau d'une face supérieure (5) d'un logement (11-1) d'un premier module fonctionnel (10-1) associé au premier module (21-1) en formant une première liaison sans vis (22) qui s'étend dans une première direction (R1) ;
b) insérer un deuxième module (21-2) du canal de décharge de gaz (20) dans une deuxième partie de réception (17) configurée au niveau de la face supérieure (5) d'un logement (11-2) d'un deuxième module fonctionnel (10-2) associé au deuxième module (21-2) en formant une première liaison sans vis (22) supplémentaire qui s'étend dans la première direction (R1) ;
c) régler le deuxième module (21-2) par rapport au premier module (21-1), de sorte qu'une patte (26) du deuxième module (21-2) chevauche le premier module (21-1), de telle sorte que par conséquent une deuxième liaison sans fil (25) est formée, laquelle s'étend dans une deuxième direction (R2) orientée transversalement par rapport à la première direction (R1).

12. Procédé selon la revendication 11, avec l'étape supplémentaire consistant à :
d) monter un élément de liaison (40) pouvant être inséré dans la deuxième direction (R2) sur le logement (11-1, 11-2) de modules fonctionnels adjacents (10-1, 10-2), lequel élément de liaison tient ensemble les modules fonctionnels (10-1, 10-2) dans la première direction (R1) et recouvre au moins partiellement une ligne de contact du premier module (21-1) avec le deuxième module (21-2).
